# EUROPÄISCHE PATENTSCHRIFT

(11) **EP 3 445 821 B1**
(45) Veröffentlichungstag und Bekanntmachung des Hinweises auf die Patenterteilung: **22.12.2021**
(21) Anmeldenummer: 17716264.1
(22) Anmeldetag: 12.04.2017
(51) Int. Cl.: C08L 33/12

(54) **PERLPOLYMERISAT AUS HARTPHASE MIT DOMÄNEN EINER WEICHPHASE**
BEAD POLYMER MADE OF HARD PHASE WITH DOMAINS OF A SOFT PHASE
POLYMÈRE EN PERLES CONSTITUÉ PAR UNE PHASE DURE ET DES DOMAINES D'UNE PHASE SOUPLE

(30) Priorität: 20.04.2016 EP 16166134
(43) Veröffentlichungstag der Anmeldung: 27.02.2019
(73) Patentinhaber: Evonik Operations GmbH, 45128 Essen (DE)
(72) Erfinder: BERNHARDT, Stefan, 63075 Offenbach (DE); HASSKERL, Thomas, 61476 Kronberg (DE); POPPE, Dirk, 60599 Frankfurt am Main (DE); WIEBER, Stephan, 76137 Karlsruhe (DE)
(74) Vertreter: Evonik Patent Association
(86) Internationale Anmeldenummer: PCT/EP2017/058796
(87) Internationale Veröffentlichungsnummer: WO 2017/182364

(56) Entgegenhaltungen:
- CN-A- 105 440 199
- DE-A1-102007 025 656
- US-A1- 2016 040 003
- US-A1- 2016 083 589

## Beschreibung

### Gebiet der Erfindung

Die vorliegende Erfindung betrifft das technische Gebiet des 3D-Drucks, insbesondere in Form des Binder Jetting Verfahrens, bei dem Partikel in einem Pulverbett mittels eines verdruckten Klebstoffs zu einem dreidimensionalen Objekt verklebt werden. Bei den Partikeln kann es sich dabei um anorganische Materialien, wie z.B. Sand oder ein Metallpulver, oder um polymere Partikel, wie zum Beispiel Polymethacrylate oder Polyamide, handeln. Polymethacrylate können dazu beispielsweise als Suspensionspolymerisate, so genannte Perlpolymerisate, vorliegen.

Die vorliegende Erfindung, gemäß Ansprüchen 1 bis 9, betrifft dabei ein Verfahren zum Aufbau dreidimensionaler Objekte durch wiederholtes Aufbringen und selektives Verbinden von Schichten eines Pulverbetts (Binder Jetting).

### Stand der Technik

Binder Jetting ist ein additiver Produktionsprozess, der auch unter dem das Verfahren gut beschreibenden Begriff 3D-Tintenstrahl-Pulverdruck bekannt ist. Bei diesem Verfahren wird ein flüssiges Bindemittel, beispielsweise mittels eines handelsüblichen Inkjet-Druckkopfs, auf eine Pulverschicht aufgetragen und damit gezielt ein Teil dieser Pulverschicht miteinander verbunden. Durch das im Wechsel mit diesem Auftragen erfolgende Aufbringen neuer Pulverschichten wird letztendlich ein dreidimensionales Produkt geformt. Insbesondere bewegt sich bei diesem Verfahren ein Tintenstrahldruckkopf selektiv über ein Pulverbett und druckt das flüssige Bindermaterial genau an den Stellen, die verfestigt werden sollen. Ein Beispiel für die Verfestigung ist die Reaktion zwischen flüssigen vinylischen Monomeren in der Tinte und Peroxiden, die im Pulver enthalten sind. Die Reaktion wird durch einen Katalysator z. B. auf der Basis eines Amins so stark beschleunigt, dass sie bei Raumtemperatur stattfindet. Der Prozess wird Lage für Lage wiederholt bis das Formteil fertig ist. Nach dem Beenden des Druckprozesses lässt sich das Formteil aus dem Pulverbett entnehmen und ggf. einer Nachbehandlung zuführen.

Beim Binder Jetting können verschiedene Materialien als Bindemittel und als Pulvermaterial eingesetzt werden. Als Pulvermaterialien sind beispielsweise Polymerpartikel, Sand, Keramikpartikel oder Metallpulver mit einem jeweiligen Durchmesser zwischen 10 und wenigen 100 µm geeignet. Bei der Verwendung von Sand entfällt zumeist eine Nachbearbeitung des fertigen Gegenstandes. Bei anderen Materialien, wie zum Beispiel den Polymerpulvern wie u.a. PMMA, kann ein nachträgliches Härten, Sintern und/oder Infiltrieren des Gegenstandes nötig sein. Eine solche nachträgliche Bearbeitung ist jedoch eigentlich unerwünscht, da sie zeit- bzw. kostenaufwendig ist und aufgrund eines oft auftretenden Schrumpfs zu einer negativen Beeinflussung der Dimensionsstabilität führen kann.

Insbesondere kommen bis dato Polymerpulver auf Basis von Suspensionspolymerisaten zum Einsatz. Die Größe der Polymerpartikel liegt im Allgemeinen zwischen einigen zehn my und einigen Hundert my. Diese Partikel zeichnen sich durch gute Rieselfähigkeit aus, sie kleben nicht zusammen und lassen sich gut als Pulverbett auftragen. Setzt man Polymerpartikel ein, die einen Gehalt von Peroxiden aufweisen, so lässt sich leicht eine Reaktion mit dem (Meth)acrylathaltigen Binder durchführen. Der Nachteil eines Pulverbetts, das aus oben genannten Partikeln besteht ist die Porosität der damit hergestellten Formkörper, da der flüssige Binder nur einen Teil der Hohlräume füllen kann.

Das Aufbringen des Bindemittels erfolgt in der Regel analog dem herkömmlichen zweidimensionalen Papierdruck. Beispiele für Bindemittelsysteme sind flüssige vinylische Monomere, die mittels in dem Pulvermaterial enthaltenen Peroxiden ausgehärtet werden. Alternativ oder zusätzlich enthält das Pulvermaterial einen die Aushärtung beschleunigenden bzw. erst bei der Umgebungstemperatur ermöglichenden Katalysator. Beispiele für einen solchen Katalysator für Acrylatharze bzw. -monomere mit Peroxiden als Initiator stellen Amine, insbesondere sekundäre Amine dar.

Gegenüber anderen 3D-Druckverfahren wie FDM oder SLS, die auf einem Aufschmelzen oder Verschweißen des das Produkt bildenden Materials basieren, hat das Binder Jetting große Vorteile. So ist dieses Verfahren von allen bekannten Verfahren am besten geeignet, farbige Objekte ohne nachträgliche Farbgebung direkt zu realisieren. Auch ist insbesondere dieses Verfahren dazu geeignet, besonders große Gegenstände herzustellen. So sind Produkte bis hin zu einer Zimmergröße beschrieben. Weiterhin sind andere Verfahren bezüglich des gesamten Druckvorgangs bis zum fertigen Objekt auch sehr zeitintensiv. Abgesehen von der eventuell nötigen Nachbearbeitung kann das Binder Jetting im Vergleich zu den anderen Verfahren sogar als besonders zeiteffizient betrachtet werden.

Darüber hinaus hat das Binder Jetting den großen Vorteil gegenüber anderen Verfahren, dass es ohne Hitzezufuhr erfolgt. Bei Verfahren, die mittels Aufschmelzen oder Verschweißen erfolgen, entstehen im Produkt durch diesen ungleichmäßigen Wärmeeintrag Spannungen, die zumeist in Folgeschritten wie einer thermischen Nachbehandlung, die weiteren Zeit- und Kostenaufwand bedeuten, wieder aufgelöst werden müssen.

Nachteilig am Binder Jetting ist die verfahrensbedingte Porosität des Produktes. So werden für mittels Binder-Jetting gedruckte Objekte nur Zugfestigkeiten erreicht, die ca. 20 mal geringer sind als die spritzgegossener Formteile aus einem vergleichbaren Material. Aufgrund dieses Nachteils wird das Binder Jetting Verfahren bis dato überwiegend zur Herstellung von Dekorstücken oder zur Abformung von Sandformen eingesetzt. Die Porosität ergibt sich vor allem aus der Tatsache, dass bei bekannten Druckverfahren nur ein Teil der Hohlräume zwischen den Partikeln mit dem Bindemittel aufgefüllt werden. Dies ergibt sich zwangsläufig aus der geringen Viskosität der aufgedruckten, flüssigen Bindemittel. Sollte mehr aufgetragen werden, so verläuft dies direkt vor und auch während des beginnenden Aushärtens in Nachbarpartikel bzw. Hohlräume zwischen den Partikeln (so genannte Zwickel). Dies wiederum führt zu einem ungenauen, unsauberen Druckbild bzw. zu einer geringen Oberflächengenauigkeit am fertigen Gegenstand.

J. Presser beschreibt in seiner Dissertation "Neue Komponenten für das generative Fertigungsverfahren des 3D-Drucks" (TU Darmstadt, 2012) die Verwendung von gefällten Emulsionspolymerisaten als Pulver für das Binder-Jetting-Verfahren. Diese Emulsionpolymerisate füllen dazu teilweise die Zwischenräume zwischen den eigentlichen Partikeln und führen damit zu einer Reduktion der Porosität. Die Aufarbeitung über Koagulation, Trocknung und Siebung führt aber zu nicht runden Sekundärpartikeln unregelmäßiger Größenverteilung. Weiterhin hat sich gezeigt, dass die so eingesetzten Emulsionspolymerisate die Schüttdichte kaum erhöhen und in Bezug auf die Stabilität des gedruckten Objekts keinen nennenswerten Einfluss haben.

DE 10 2007 025656 A1, CN 105 440 199 A, US 2016/083589 A1 und US 2016/040003 A1 beschreiben weitere Zusammensetzungen aus (Meth)Acrylat- -Monomeren oder -Polymeren.

### Aufgabe

Die der vorliegenden Erfindung zugrunde liegende Aufgabe war es, das Binder Jetting Verfahren dadurch zu beschleunigen, dass es möglich ist, Kunststoffpartikel zu verdrucken, ohne dass eine zeitaufwendige Nachbearbeitung des Produktes erfolgen muss.

Weiterhin war es Aufgabe, die mechanische Stabilität von Produkten eines Binder Jetting Verfahrens, insbesondere solche auf Basis eine Polymerpulvers, insbesondere eines PMMA-Pulvers, derart zu verbessern, dass diese als Funktionsteile eingesetzt werden können. Insbesondere war es Aufgabe in diesem Zusammenhang, Formteile zu realisieren, die zumindest 50% des Zug-E-Moduls eines analogen spritzgegossenen Teils aufweisen. "Analog" bedeutet in diesem Fall beispielsweise, dass ein spritzgegossener PMMA-Formkörper mit einem Binder Jetting-Produkt auf Basis eines PMMA-Pulvers verglichen wird.

Weitere nicht explizit genannte Aufgaben können sich aus der Beschreibung, den Beispielen oder den Ansprüchen der vorliegenden Anmeldung, bzw. aus dem Gesamtzusammenhang derselben ergeben.

### Lösung

Überraschend wurden diese Aufgaben mittels eines neuartigen Verfahrens zur Herstellung von dreidimensionalen Objekten aus einem Pulverbett mittels einem Binder Jetting Verfahren gelöst. Anspruch 1 offenbart ein Verfahren zur Herstellung von dreidimensionalen Objekten aus einem Pulverbett mittels eines Binder Jetting Verfahrens durchmehrfaches Wiederholen der Verfahrensschritte a) Aufbringen einer neuen Pulverschicht auf der Oberfläche des Pulverbetts und b) selektives Auftragen eines Bindemittels und anschließendem oder gleichzeitigem Aushärten dieses Bindemittels im Pulverbett, wobei das Pulverbett mindestens eine Art Partikel aufweist, dadurch gekennzeichnet, dass diese Partikel als Suspensionspolymerisate durch radikalische Polymerisation in Anwesenheit von Wasser hergestellte pulverförmige Materialien mit einem volumengemittelten Median des Partikeldurchmessers (d50) zwischen 30 und 120 µm sind und mindestens zwei verschiedene Phasen aufweisen, wobei die erste Phase eine Glasübergangstemperatur, gemessen mittels DSC, kleiner 40 °C und die zweite Phase eine Glasübergangstemperatur, gemessen mittels DSC, größer 70 °C aufweist, wobei die DSC-Messungen mit Abkühl- und Aufheizraten von 10 °C / min oder weniger durchgeführt werden.

Bevorzugt handelt es sich bei dem Partikel dabei um einen Polymerpartikel, der einen zur Aushärtung des Bindemittels geeigneten Initiator oder einen die Aushärtung beschleunigenden Katalysator oder Beschleuniger enthält. Bei den genannten Initiatoren kann es sich beispielsweise um dem Fachmann allgemein bekannte Peroxide oder Azoinitiatoren handeln. Bei den Beschleunigern handelt es sich beispielsweise um Verbindungen, die in Kombination mit einem Initiator, welcher wiederum für sich alleine eine relativ hohe Zerfallstemperatur aufweist, die Zerfallstemperatur dieses Initiators absenkt. Dies ermöglicht, dass schon bei der Umgebungstemperatur im Drucker oder bei einem Temperschritt bis 50 °C die Härtung gestartet wird. Im Falle eines hochzerfallenden Initiators wären dafür zum Beispiel sekundäre oder tertiäre, zumeist aromatische Amine geeignet. Genannte Katalysatoren können eine entsprechende oder ähnliche, aktivierende Wirkung haben. Die genaue Zusammensetzung des Initiatorsystems ist im Allgemeinen für den Fachmann jedoch einfach zu wählen.

Besonders bevorzugt handelt es sich bei den Partikeln, bzw. den Polymerpartikeln um PMMA-Suspensionpolymerisate mit einem Median des Durchmessers bevorzugt zwischen 30 und 110 µm und besonders bevorzugt zwischen 35 und 100 µm. Besonders bevorzugt zeichnet sich die erste Phase des Polymerpartikels dadurch aus, dass es sich bei dieser ersten Phase um eine zu mindestens 60 Gew% aus Acrylaten hergestellte Phase handelt, welche eine Glasübergangstemperatur kleiner 30 °C aufweist.

Besonders bevorzugt handelt es sich bei der zweiten Phase des Polymerpartikels um eine zu mindestens 60 Gew% aus MMA hergestellte Phase, welche eine Glasübergangstemperatur größer 80 °C aufweist.

Mit dem erfindungsgemäßen Verfahren ergibt sich der besonders große Vorteil eines besonders schnellen Auflösens der weichen Phase der Polymerpartikel, das zu einer schnellen Viskositätszunahme des Bindemittels führt, was wiederum ein Fluten von tiefer liegenden Pulverschichten im Pulverbett, die nicht verdruckt werden sollen, verhindert. Weiterhin vorteilhaft ist, dass das erfindungsgemäße Verfahren großtechnisch umsetzbar ist.

Neben dem genannten Verfahren zur Herstellung von dreidimensionalen Objekten, ist auch ein Verfahren zur Herstellung der dazu eingesetzten zweiphasigen Polymerpartikel Gegenstand der vorliegenden Erfindung. Dieses Verfahren zur Herstellung der Polymerpartikel zeichnet sich dadurch aus, dass es sich bevorzugt um eine Suspensionspolymerisation unter sequentieller Zugabe der beiden zu den jeweiligen Phasen führenden Monomermischungen handelt.

Als Suspensionspolymerisate dienen beispielsweise durch radikalische Polymerisation in Anwesenheit von Wasser hergestellte pulverförmige Materialien mit einem volumengemittelten Median des Partikeldurchmessers (d50) zwischen 30 und 120 µm. Besonders bevorzugt handelt es sich bei den Suspensionspolymerisaten um PMMA oder MMA-Copolymerisate. Dazu können die Comonomere beispielsweise aus der Gruppe der Acrylate, Methacrylate und Styrol gewählt werden.

Insbesonders bevorzugt wird dabei zuerst die zweite Phase durch eine Suspensionspolymerisation hergestellt. Wenn dies insofern erfolgt ist, dass mindestens 75 Gew%, besonders bevorzugt mindestens 85 Gew%, insbesondere bevorzugt mindestens 90 Gew% der eingesetzten Monomere dieser zweiten Phase umgesetzt wurden, wird eine Monomermischung zur Herstellung der ersten Phase zu dieser Suspension gegeben. Diese zweite Monomermischung zur Herstellung der ersten Phase ist dadurch gekennzeichnet, dass das daraus entstehende Polymer eine Glastemperatur unter 40°C, bevorzugt unter 30 °C aufweist und nicht mit PMMA bzw. dem Polymer der zweiten Phase mischbar ist.

Deutlich bevorzugt enthält diese Monomerphase zur Herstellung der zweiten Phase, der Hartphase, mindestens einen Vernetzer. Bevorzugt enthält diese Phase zwischen 0,1 und 10 Gew%, besonders bevorzugt zwischen 1 und 5 Gew% Vernetzer. Besonders bevorzugte Vernetzer sind di- oder tri-(Meth)acrylate.

Für den Fall einer größeren Menge Vernetzer kann es passieren, dass eine kleine Menge dieses Vernetzers einer weiteren Polymerisation noch zur Verfügung steht, wenn die zweite Monomermischung zur Herstellung der ersten Polymerphase zugegeben wird. Dies kann zu zwei unterschiedlichen Effekten führen. Zum einen kann es zu einer zumindest teilweisen kovalenten Bindung zwischen den beiden Phasen beitragen, welche sogar bis zu einem gewissen Grad erwünscht wäre und zur Stabilität des Partikels beitragen kann. Zum anderen ist es möglich, dass es auch in der Weichphase des Polymerpartikels zu einer sehr leichten Vernetzung oder zu einer zusätzlichen Molekulargewichtserhöhung kommt..

Als vorteilhafte, jedoch nicht zwingende Ausführung dieses Verfahrens hat es sich erwiesen, wenn beide Monomerphasen jeweils einen Initiator oder ein Initiatorgemisch enthalten. Bei dieser Ausführung ist es besonders günstig, wenn der oder die Initiatoren in der zweiten Monomermischung zur Herstellung der ersten Phase eine höhere Zerfallstemperatur aufweisen. Bevorzugt enthält jede Phase genau einen Initiator. Im Prinzip sind aber auch Mischungen mehrerer Initiatoren einsetzbar.

Besonders bevorzugt liegt das Verhältnis der ersten Phase zur zweiten Phase zwischen 1 zu 9 und 1 zu 1,5. Dabei beziehen sich diese Angaben auf die insgesamt im Verfahren eingesetzten Monomerphasen, die als solche naturgemäß nie gleichzeitig vollständig nebeneinander vorliegen.

Die Wahl der spezifischen Reaktionsbedingungen bedingt die Morphologie der entstehenden Polymerpartikel: hat die zweite Monomermischung wenig Zeit, das vernetzte PMMA der ersten Polymerisation anzuquellen, und wird sie im Überschuss zur ersten Monomermischung eingesetzt, resultieren nach der zweiten Polymerisation weiche Suspensionspolymerisate mit harten, vernetzten PMMA-Kernen. Daher wird zum einen bevorzugt ein Unterschuss der zweiten Monomermischung gewählt. Zum anderen wird zur Polymerisation der zweiten Monomermischung bevorzugt ein Initiator ausgewählt, der höher zerfällt als der der ersten Polymerisationsstufe. So hat die zweite Monomermischung Monomermischung ausreichend Zeit, die vernetzten PMMA-Partikel anzuquellen, während der Ansatz zur zweiten Polymerisationsstufe aufgeheizt wird. Während dieser zweiten Polymerisationsstufe entmischt sich die entstehende erste Polymerphase von der zweiten innerhalb der Polymerkugeln. Die Vernetzung der ersten Polymerisationsstufe bewirkt, dass es nicht zu einer Makrophasenseparation kommt, sondern dass die Weichphase der ersten Polymerphase als kleine Domänen anfällt. Die Domänengröße ist gut steuer- und reproduzierbar. Weiterhin muss der Ansatz nicht während der Polymerisation abgekühlt werden. Zum dritten wird durch das Vernetzen der äußeren Struktur eine hohe Dimensionsstabilität beim Binder-Jetting-Verfahren erreicht, selbst bei großen verdruckten Mengen an Bindemittel.

Alle Glasübergangstemperaturen werden erfindungsgemäß mittels DSC bestimmt. Der Fachmann weiß dazu, dass die DSC nur ausreichend aussagekräftig ist, wenn nach einem ersten Aufheizzyklus bis zu einer Temperatur, die minimal 25 °C oberhalb der höchsten Glasübergangs- bzw. Schmelztemperatur, dabei jedoch mindestens 20 °C unterhalb der tiefsten Zersetzungstemperatur eines Materials liegt, die Materialprobe für mindestens 2 min bei dieser Temperatur gehalten wird. Danach wird wieder auf eine Temperatur, die mindestens 20 °C unterhalb der tiefsten zu bestimmenden Glasübergangs- oder Schmelztemperatur liegt, abgekühlt, wobei die Abkühlrate maximal 20 °C / min, bevorzugt maximal 10 °C / min betragen sollte. Nach einer weiteren Wartezeit von wenigen Minuten erfolgt dann die eigentliche Messung, bei der mit einer Aufheizrate von in der Regel 10 °C / min oder weniger die Probe bis mindestens 20 °C über die höchste Schmelz- oder Glasübergangstemperatur erhitzt wird. Die jeweiligen höchsten und tiefsten Grenztemperaturen können in einfachen Vormessungen mit einer getrennten Probe grob vorbestimmt werden.

Bei der Anwendung dieses Verfahrens zur Herstellung der Polymerpartikel erfolgt eine Entmischung schon während der sequentiell durchgeführten Polymerisation. Dadurch werden wiederum mikrostrukturierte zweiphasige Suspensionspolymerisate erzeugt. Diese weisen dabei eine Phase, die sich bei Lösungsmittel- bzw. Monomerkontakt leicht und schnell löst und damit zu einer Verdickung des Bindemittels führt, auf. Somit kann mehr Bindemittel im eigentlichen Druckverfahren eingesetzt werden, ohne die Formtreue zu verlieren. Gleichzeitig aber kann als weiterer Vorteil eine geringere Porosität des Endprodukts und damit eine höhere mechanische Stabilität desselben erlangt werden.

Die im Weiteren aufgeführten Detailbetrachtungen dienen dazu eine bevorzugte Ausführungsform bzgl. deren Ausführbarkeit zu verdeutlichen. Diese Betrachtungen sind jedoch nicht dazu aufgeführt, die vorliegende Erfindung in irgendeiner Form einzuschränken:
Die wässrige Phase enthält VE-Wasser, Dispergierhilfsmittel und ggf. weitere oberflächenaktive Stoffe sowie Prozesshilfsmittel.

Unter Rühren und je nach angestrebter Teilchengröße mehr oder weniger intensiver Scherung werden die Tropfen einer Mischung aus MMA, einem geeigneten Vernetzermolekül, wie zum Beispiel ein di-Methacrylat oder Allylmethacrylat, und einem Initiator, insbesondere einem Peroxid oder einer Diazoverbindung mit geeigneter Zerfallskinetik, zu feinen Tröpfchen dispergiert und durch einen externen Einfluss wie zum Beispiel Temperaturerhöhung zur Polymerisation der Monomerphase gebracht. Es entstehen vernetzte PMMA-Partikel.

Unter weiterem Rühren wird eine Mischung aus Monomer(en) und einem Initiator zugegeben, der dadurch gekennzeichnet ist, eine höhere Zersetzungstemperatur als der der 1. Polymerisation aufzuweisen. Das Monomer bzw. die Monomermischung ist dadurch gekennzeichnet, dass das daraus entstehende Polymer bzw. Copolymer eine Glastemperatur unter 30 °C aufweist und nicht mit PMMA mischbar ist. Geeignete Monomere sind z.B. Acrylate, wie z.B. Methyl-, Ethyl, Propyl-, Butyl- oder Ethylhexylacrylat.

Durch Unverträglichkeit des gelösten und des neuen Polymers entmischen sich die Polymerphasen und bilden mehr oder weniger kugelförmige Partikel mit einer inneren zweiten Phase aus.

Bevorzugt verbleibt ein Restperoxidgehalt in der weichen zweiten Phase der durch die höhere Lösungsgeschwindigkeit der weichen Phasen zu einem homogeneren Auspolymerisieren der zum Aushärten über InkJet aufgebrachten Monomermischung führt.

Die Polymerperlen werden beim Binder Jetting Verfahren als Pulverbett eingesetzt. Beim Bedrucken mit einer Flüssigkeit, z.B. Lösemittel und/oder Monomermischung, die ggf. noch weitere Komponenten enthalten kann, lösen sich die kontinuierliche Phase und die darin dispergierte Phase unterschiedlich schnell auf. Mit steigendem Vernetzungsgrad der dispergierten Phase findet nur ein Anquellen anstelle einer vollständigen Lösung statt.

Durch Auswahl der Monomere für kontinuierliche und dispergierte Phase lassen sich die Löseeigenschaften gezielt einstellen. Weiche Polymere mit niedriger Glastemperatur lösen sich dabei schneller an als harte Polymere mit höherer Glastemperatur. Die Löslichkeit hängt auch von den Eigenschaften des als Lösemittel eingesetzten Lösemittels oder Monomeren ab. Gute Lösemittel in diesem Sinne zeichnen sich durch niedrige Viskosität und ähnliche Polarität wie das zu lösende Harz aus.

## Patentansprüche

1. Verfahren zur Herstellung von dreidimensionalen Objekten aus einem Pulverbett mittels eines Binder Jetting Verfahrens durch mehrfaches Wiederholen der Verfahrensschritte a) Aufbringen einer neuen Pulverschicht auf der Oberfläche des Pulverbetts und b) selektives Auftragen eines Bindemittels und anschließendem oder gleichzeitigem Aushärten dieses Bindemittels im Pulverbett, wobei das Pulverbett mindestens eine Art Partikel aufweist, **dadurch gekennzeichnet, dass** diese Partikel als Suspensionspolymerisate durch radikalische Polymerisation in Anwesenheit von Wasser hergestellte pulverförmige Materialien mit einem volumengemittelten Median des Partikeldurchmessers (d₅₀) zwischen 30 und 120 µm sind und mindestens zwei verschiedene Phasen aufweisen, wobei die erste Phase eine Glasübergangstemperatur, gemessen mittels DSC, kleiner 40 °C und die zweite Phase eine Glasübergangstemperatur, gemessen mittels DSC, größer 70 °C aufweist, wobei die DSC-Messungen mit Abkühl- und Aufheizraten von 10 °C / min oder weniger durchgeführt werden.

2. Verfahren gemäß Anspruch 1, **dadurch gekennzeichnet, dass** es sich bei dem Partikel um einen Polymerpartikel, enthaltend mindestens einen zur Aushärtung des Bindemittels geeigneten Initiator oder einen die Aushärtung beschleunigenden Katalysator oder Beschleuniger, handelt.

3. Verfahren gemäß Anspruch 1 oder 2, **dadurch gekennzeichnet, dass** es sich bei den Partikeln um als Suspensionspolymerisate erhaltene PMMA oder MMA-Copolymerisate. handelt.

4. Verfahren gemäß mindestens einem der Ansprüche 1 bis 3, **dadurch gekennzeichnet, dass** es sich bei der ersten Phase des Polymerpartikels um eine zu mindestens 60 Gew% aus Acrylaten hergestellte Phase, welche eine Glasübergangstemperatur kleiner 30 °C aufweist, handelt.

5. Verfahren gemäß mindestens einem der Ansprüche 1 bis 4, **dadurch gekennzeichnet, dass** es sich bei der zweiten Phase des Polymerpartikels um eine zu mindestens 60 Gew% aus MMA hergestellte Phase, welche eine Glasübergangstemperatur größer 80 °C aufweist, handelt.

6. Verfahren gemäß mindestens einem der Ansprüche 1 bis 5, **dadurch gekennzeichnet, dass** die zweiphasigen Polymerpartikel durch eine Suspensionspolymerisation unter sequentieller Zugabe der beiden zu den jeweiligen Phasen führenden Monomermischungen hergestellt wurden.

7. Verfahren gemäß Anspruch 6, **dadurch gekennzeichnet, dass** zuerst die zweite Phase durch Polymerisation hergestellt wird, bevor eine Monomermischung zur Herstellung der ersten Phase zu dieser Suspension gegeben wird.

8. Verfahren gemäß Anspruch 6 oder 7, **dadurch gekennzeichnet, dass** beide Monomerphasen mindestens einen Initiator enthalten, **dadurch gekennzeichnet, dass** der oder die Initiatoren in der zweiten Monomermischung zur Herstellung der ersten Phase eine höhere Zerfallstemperatur aufweisen.

9. Verfahren gemäß mindestens einem der Ansprüche 1 bis 8, **dadurch gekennzeichnet, dass** das Verhältnis der ersten Phase zur zweiten Phase zwischen 1 zu 9 und 1 zu 1,5 liegt.

## Claims

1. Process for the production of three-dimensional objects from a powder bed by means of a binder jetting process through multiple repetition of the following process steps: a) applying a new powder layer on the surface of the powder bed, and b) selectively applying a binder and subsequent or simultaneous hardening of said binder in the powder bed, where the powder bed comprises at least one type of particle, **characterized in that** said particles are, in the form of a suspension polymer, pulverulent materials produced by free-radical polymerization in the presence of water and having a volume-average median particle diameter (d₅₀) of between 30 and 120 µm and that said particles have at least two different phases, where the glass transition temperature of the first phase, measured by DSC, is below 40°C and the glass transition temperature of the second phase, measured by DSC, is above 70°C, the DSC measurements being carried out with cooling/heating rates of 10°C/min or less.

2. Process according to Claim 1, **characterized in that** the particle is a polymer particle comprising at least one initiator suitable for the hardening of the binder or one catalyst or accelerator that accelerates the hardening.

3. Process according to Claim 1 or 2, **characterized in that** the particles are PMMA or MMA copolymers obtained in the form of a suspension polymer.

4. Process according to at least one of Claims 1 to 3, **characterized in that** the first phase of the polymer particle is a phase which has a glass transition temperature below 30°C and at least 60% by weight of which is produced from acrylates.

5. Process according to at least one of Claims 1 to 4, **characterized in that** the second phase of the polymer particle is a phase which has a glass transition temperature above 80°C and at least 60% by weight of which is produced from MMA.

6. Process according to at least one of Claims 1 to 5, **characterized in that** the two-phase polymer particles have been produced by suspension polymerization with sequential addition of the two monomer mixtures that lead to the respective phases.

7. Process according to Claim 6, **characterized in that** the second phase is first produced by polymerization before a monomer mixture for the production of the first phase is added to this suspension.

8. Process according to Claim 6 or 7, **characterized in that** both monomer phases comprise at least one initiator, **characterized in that** the initiator(s) in the second monomer mixture for the production of the first phase have a higher decomposition temperature.

9. Process according to at least one of Claims 1 to 8, **characterized in that** the ratio of the first phase to the second phase is from 1:9 to 1:1.5.

## Revendications

1. Procédé pour la fabrication d'objets tridimensionnels à partir d'un lit de poudre au moyen d'un procédé de projection de liant par répétition à plusieurs reprises des étapes de processus a) dépôt d'une nouvelle couche de poudre sur la surface du lit de poudre et b) application sélective d'un liant et durcissement simultané ou subséquent de ce liant dans le lit de poudre, le lit de poudre comportant au moins un type de particule, **caractérisé en ce que** ces particules sont, en tant que produits de polymérisation en suspension, des matériaux pulvérulents produits par polymérisation radicalaire en présence d'eau, ayant une médiane en volume du diamètre de particule (d₅₀) comprise entre 30 et 120 µm et présentent au moins deux phases différentes, la première phase présentant une température de transition vitreuse, mesurée par DSC, inférieure à 40 °C et la seconde phase présentant une température de transition vitreuse, mesurée par DSC, supérieure à 70 °C, les mesures de DSC étant effectuées à des vitesses de chauffage et de refroidissement de 10 °C/min ou moins.

2. Procédé selon la revendication 1, **caractérisé en ce que** pour ce qui est de la particule il s'agit d'une particule de polymère, contenant au moins un amorceur approprié au durcissement du liant ou un accélérateur ou catalyseur accélérant le durcissement.

3. Procédé selon la revendication 1 ou 2, **caractérisé en ce que** pour ce qui est des particules il s'agit de PMMA ou copolymères de MMA, obtenus sous forme de produits de polymérisation en suspension.

4. Procédé selon au moins l'une quelconque des revendications 1 à 3, **caractérisé en ce que** pour ce qui est de la première phase de la particule de polymère il s'agit d'une phase préparée à raison d'au moins 60 % en poids à partir d'acrylates, qui présente une température de transition vitreuse inférieure à 30 °C.

5. Procédé selon au moins l'une quelconque des revendications 1 à 4, **caractérisé en ce que** pour ce qui est de la seconde phase de la particule de polymère il s'agit d'une phase préparée à raison d'au moins 60 % en poids à partir de MMA, qui présente une température de transition vitreuse supérieure à 80 °C.

6. Procédé selon au moins l'une quelconque des revendications 1 à 5, **caractérisé en ce que** les particules de polymères en deux phases ont été produites par une polymérisation en suspension avec addition séquentielle des deux mélanges de monomères conduisant aux phases respectives.

7. Procédé selon la revendication 6, **caractérisé en ce qu'**on prépare d'abord la seconde phase par polymérisation, avant d'ajouter à cette suspension un mélange de monomères destiné à la préparation de la première phase.

8. Procédé selon la revendication 6 ou 7, **caractérisé en ce que** les deux phases de monomères contiennent au moins un amorceur, **caractérisé en ce que** dans le second mélange de monomères destiné à la préparation de la première phase l'amorceur ou les amorceurs présentent une plus haute température de décomposition.

9. Procédé selon au moins l'une quelconque des revendications 1 à 8, **caractérisé en ce que** le rapport de la première phase à la seconde phase se situe entre 1 à 9 et 1 à 1,5.
